Europäisches Patentamt

European Patent Office

Office européen des brevets

(19)

(11) EP 0 834 086 B1

(12) **EUROPÄISCHE PATENTSCHRIFT**

(45) Veröffentlichungstag und Bekanntmachung des Hinweises auf die Patenterteilung:
**24.02.1999 Patentblatt 1999/08**

(21) Anmeldenummer: **96922832.9**

(22) Anmeldetag: **19.06.1996**

(51) Int Cl.6: **G01S 17/32**, G01S 17/36

(86) Internationale Anmeldenummer:
**PCT/EP96/02636**

(87) Internationale Veröffentlichungsnummer:
**WO 97/01107 (09.01.1997 Gazette 1997/03)**

(54) **FMCW-ABSTANDSMESSVERFAHREN**

FMCW DISTANCE MEASUREMENT PROCESS

PROCEDE DE MESURE DE DISTANCES EN ONDES ENTRETENUES DE FREQUENCE MODULEE

(84) Benannte Vertragsstaaten:
**CH DE FR GB LI NL SE**

(30) Priorität: **20.06.1995 DE 19521771**

(43) Veröffentlichungstag der Anmeldung:
**08.04.1998 Patentblatt 1998/15**

(73) Patentinhaber:
- **Mrosik, Jan Michael**
  **80337 München (DE)**
- **Nagel, Jörg**
  **47798 Krefeld (DE)**
- **Stojanoff, Christo G.**
  **52064 Aachen (DE)**

(72) Erfinder:
- **Mrosik, Jan Michael**
  **80337 München (DE)**
- **Nagel, Jörg**
  **47798 Krefeld (DE)**
- **Stojanoff, Christo G.**
  **52064 Aachen (DE)**

(74) Vertreter: **Stamer, Harald, Dipl.-Phys.**
**c/o Leica Industrieverwaltung GmbH,**
**Konzernstelle Patente + Marken,**
**Postfach 20 20**
**35530 Wetzlar (DE)**

(56) Entgegenhaltungen:
EP-A- 0 640 846          DE-C- 4 027 990
US-A- 4 812 035

- **IEEE TRANSACTIONS ON INSTRUMENTATION AND MEASUREMENT, Bd. 42, Nr. 4, 1.August 1993, Seiten 812-816, XP000399896 WOODS G S ET AL: "A HIGH ACCURACY MICROWAVE RANGING SYSTEM FOR INDUSTRIAL APPLICATIONS"**
- **FREQUENZ, Bd. 48, Nr. 3/4, 1.März 1994, Seiten 79-83, XP000450762 WEHR A: "AUSLEGUNGSKRITERIEN FUR EIN ABBILDENDES CW-LASERENTFERNUNGSMESSSYSTEM UND SEINE REALISIERUNG DESIGN CRITERIA FOR AN IMAGING CW-LASER-RANGING-SYSTEM AND ITS REALIZATION (PART 1)"**
- **FREQUENZ, Bd. 48, Nr. 5/6, 1.Mai 1994, Seiten 123-127, XP000460244 WEHR A: "AUSLEGUNGSKRITERIEN FUR EIN ABBILDENDES CW-LASERENTFERNUNGSMESSSYSTEM UND SEINE REALISIERUNG DESIGN CRITERIA FOR AN IMAGING CW-LASER-RANGING-SYSTEM AND ITS REALIZATION (PART 2)"**

**Beschreibung**

Die Erfindung betrifft ein FMCW-Abstandsmeßverfahren.

Abstandsmeßverfahren sind in vielfältiger Weise bekannt. Die vorliegende Erfindung betrifft ein berührungslos messendes Verfahren, das zur Ermittlung der Distanz zu einem frei im Raum liegenden Objekt und insbesondere zur Vermessung der Konturen von Objekten geeignet ist. Darüber hinaus können damit auch Störstellen in wellenleitenden Medien und Strukturen darin erkannt und vermessen werden. Das Meßprinzip besteht im Aussenden und Empfangen intensitäts- oder frequenzmodulierter akustischer, optischer oder sonstiger elektromagnetischer Wellen, insbesondere im Hochfrequenzbereich. Im folgenden sollen diese allgemein als Sendewelle bzw. Empfangswelle bezeichnet werden.

Wird die Sendewelle frequenzmoduliert, so läßt sich das Sendesignal durch den Ausdruck

$$s(t) = A \cdot \cos(2\pi f_0 t + 2\pi \int_{-\infty}^{t} f(\eta)d\eta)$$

mit der Amplitude A, der Trägerfrequenz $f_0$ und der Frequenzmodulationsfunktion f(t) darstellen. Bei Intensitätsmodulation nimmt die Sendewelle die allgemeine Form

$$s(t) = A(t) \cdot \cos(2\pi\nu t + \varepsilon)$$

an, mit der zeitabhängigen Amplitude A(t), der Trägerfrequenz $\nu$ der Sendewelle und einer beliebigen Phase $\varepsilon$. Im Falle einer sinusförmigen Amplitudenmodulation gilt

$$A(t) = A \cdot \cos(2\pi f_0 t + 2\pi \int_{-\infty}^{t} f(\eta)d\eta),$$

wobei $f_0$ nun die Trägerfrequenz der Modulation und f(t) eine Frequenzmodulationsfunktion darstellen. In den folgenden Ausführungen wird die Frequenz $f_0$ für alle Fälle als Trägerfrequenz, die Frequenz $\nu$ als Sendefrequenz bezeichnet. Im Fall der Frequenzmodulation sind Trägerfrequenz und Sendefrequenz identisch.

Bekannte Meßverfahren basieren z. B. auf dem Impulslaufzeitverfahren, bei dem die Sendewelle mit zeitlich begrenzten Impulsen intensitätsmoduliert ist und die Abstandsinformation aus der gemessenen Laufzeit des Impulses abgeleitet wird. Ein solches Verfahren ermöglicht eine eindeutige Vermessung eines interessierenden Meßpunktes oder einer interessierenden Geometrie, solange die Laufzeit des Pulses zum Objekt und zurück kleiner ist als die Periode der Pulswiederholung des Systems.

Bei Pulswiederholraten im kHz-Bereich, wie sie bei typischen Systemen vorliegen, ergibt sich in der Praxis ein sehr großer Eindeutigkeitsbereich. Bedingt durch die begrenzte Pulsenergie von kurzen Pulsen, die die wellenerzeugenden Sender abgeben können und die geringe statistische Effizienz, ist die Auflösung solcher Systeme allerdings gering oder aber die Meßzeit wegen der Aufsummierung vieler Meßimpulse hoch.

Im Gegensatz dazu zeichnet sich das ebenfalls gebräuchliche Phasenvergleichsverfahren durch eine hohe statistische Effizienz und damit durch eine hohe Genauigkeit bei kurzen Meßzeiten aus. Durch die dabei verwendete Periodizität der Modulation der kontinuierlich ausgesendeten und modulierten Wellen ergibt sich allerdings ein durch die Modulationsfrequenz bestimmter begrenzter Eindeutigkeitsbereich. Die Forderungen nach hoher Auflösung und großem Eindeutigkeitsbereich scheinen sich zu widersprechen.

Das dem Impulslaufzeitverfahren zugrundeliegende Meßprinzip läßt sich dadurch charakterisieren, daß die Information in der sogenannten Hüllkurve des Empfangssignals genutzt wird. Die Hüllkurve ist durch die Pulsform des Sendesignals gegeben.

Für eine hohe Meßauflösung muß nach den Ergebnissen der Estimationstheorie die Bandbreite der Modulation möglichst hoch sein. Dies bedingt möglichst kurze Sendepulse. In realen Systemen ist die zur Verfügung stehende elektrische Bandbreite begrenzt. Dabei wird unter der Bandbreite der Frequenzbereich von der größten positiven Frequenz bis zur größten negativen Frequenz verstanden. Dies führt auf die Forderung, die Bandbreite realer Systeme mit Hilfe geeigneter Modulationssignale in optimaler Weise auszunutzen und so die Meßanordnung statistisch effizient zu gestalten.

Eine optimale Ausnutzung der elektrischen Bandbreite ergibt sich dann, wenn sich die spektrale Energie des Signals s(t) bei Frequenzmodulation oder des Signals A(t) bei Intensitätsmodulation auf der maximalen durch das System übertragbaren Frequenz konzentriert. Da sich die spektrale Energie von Pulsen im Frequenzbereich um den Frequenzursprung konzentriert, ermöglicht das Impulslaufzeitverfahren zwar eine eindeutige Auswertung des empfangenen Signals zur Ermittlung der gewünschten Meßgröße, nutzt allerdings die verfügbare elektrische Bandbreite des Systems nicht in optimaler Weise aus.

Eine optimale Ausnutzung der elektrischen Bandbreite leistet dagegen das Phasenvergleichsverfahren, das sich dadurch charakterisieren läßt, daß die sogenannte Feinstruktur des Empfangssignals zur Informationsgewinnung genutzt wird. Diese Feinstruktur, welche die gewünschte Information über die Entfernung eines Meßpunktes in Form der Signalphase enthält, ist jedoch durch das Auftreten von Mehrdeutigkeiten gekennzeichnet.

Eine Möglichkeit, eindeutige Messungen zu erzielen und gleichzeitig einen Dauerbetrieb des Wellen-Senders zu ermöglichen, besteht darin, die Frequenz des Sendesignals zu modulieren. Systeme, die nach diesem Verfahren arbeiten, werden als FMCW-Systeme bezeichnet, wobei sich die Abkürzung FMCW aus ,,frequency modulated continuous wave" ableitet. Ein solches Verfahren ist beispielsweise in tm - Technisches Messen 62 (1995) 2, Seiten 66 bis 73, ausführlich beschrieben. Bekannte Verfahren arbeiten überwiegend im Radar-Bereich. Eine Übertragung des FMCW-Konzepts auf andere Frequenzbereiche ist naheliegend.

Das in der vorgenannten Literaturstelle beschriebene FMCW-Konzept besteht darin, ein Mikrowellensignal mit einem freilaufenden Oszillator zu erzeugen und als transmittiertes Signal auf eine Übertragungsstrecke zu geben, die der auszumessenden Freiraumstrecke entspricht. Das als Trägerfrequenz dienende Mikrowellensignal wird mit einer kontinuierlichen Frequenzänderung moduliert. Üblicherweise wird eine kontinuierlich linear ansteigende oder abfallende Frequenzänderung gewählt. Es ist jedoch auch möglich, eine diskret ansteigende oder abfallende Frequenzänderung vorzusehen.

Das in der Übertragungsstrecke reflektierte Signal wird in einem Mischer dem gesendeten Signal überlagert und das Mischprodukt nach einer Tiefpaßfilterung ausgewertet. Die Laufzeit des reflektierten Signals ist der zu messenden Distanz proportional. Das Verfahren ist den oben beschriebenen Impulslaufzeitverfahren zuzuordnen, wobei die dem Impuls zugeordnete Hüllkurve der Frequenzmodulation des Signals zuzuordnen ist.

Das Auswerteverfahren zur Ermittlung der Laufzeit des reflektierten Signals kann anhand eines Mischprozesses zweier unterschiedlicher Frequenzen beschrieben werden. Dabei wird zweckmäßigerweise ein komplexer Mischprozeß verwendet, bei dem das vom Oszillator erzeugte Signal sowohl bei unveränderter Phase mit dem reflektierten Signal als auch um 90° phasenverschoben mit dem reflektierten Signal gemischt wird. Das Verhalten des Mischers entspricht einem Analog-Multiplizierer. In der Hochfrequenztechnik ist diese Signalverarbeitung als Homodyne-Verfahren bekannt.

Stellt man die Frequenzmodulation des Sendesignals in einem f(t)-Diagramm dar, so ergibt sich bei linearer Frequenzänderung eine linear ansteigende Gerade zwischen dem Anfangszeitpunkt der Frequenzänderung und dem Endzeitpunkt. Für das reflektierte Signal ergibt sich dieselbe Gerade, allerdings um die Laufzeit in dem Diagramm gegenüber der ersten Geraden verschoben. Betrachtet man zu einem bestimmten Zeitpunkt nach Empfang des reflektierten Signals die Differenz der den beiden Geraden zugehörigen Frequenzen, so ergibt sich eine Differenzfrequenz, die allein von der Laufzeitverzögerung des Empfangssignals und damit von der zu messenden Distanz abhängig ist. Die Differenzfrequenz ist für jeden Zeitpunkt innerhalb der Modulationsperiode dieselbe. Sie ist um Größenordnungen geringer als die Signalfrequenzen und damit meßtechnisch leicht zu verarbeiten. Die Distanzmessung ist eindeutig, solange die Modulationsperiode größer als die Laufzeitverzögerung ist. Der vorgenannte Mischprozeß mit nachfolgender Tiefpaßfilterung dient der Erzeugung eines mit der Differenzfrequenz monofrequenten Meßsignals, wobei die homodyne Signalverarbeitung sowohl ein der Differenzfrequenz proportionales Sinussignal als auch ein Cosinussignal liefert.

Bei diskreter linearer Frequenzmodulation liefert das Verfahren einzelne Abtastpunkte der Sinus- und Cosinussignale bei diskreten Modulationsfrequenzen. Im Falle einer sich nichtlinear verändernden Modulationsfrequenz verändert sich die Differenzfrequenz über der Modulationsperiode.

Zur Ermittlung der die Entfernungsinformation enthaltenden Differenzfrequenz werden in der oben angegebenen Literaturstelle verschiedene Verfahren angegeben. Das Verfahren des mittleren Phasenhubs besteht darin, für verschiedene momentane Modulationsfrequenzen die Phasenverschiebung zwischen Sendesignal und Empfangssignal zu messen und in einem Phasen-Frequenz-Diagramm aufzutragen. Wird für die Meßwerte eine Ausgleichsgerade bestimmt, so ist deren Steigung der oben genannten Differenzfrequenz und damit der Entfernung proportional.

Zur Ermittlung der Differenfrequenz kann auch eine Fouriertransformation des Differenzfrequenzsignals erfolgen. Dabei ergibt sich im Frequenzbereich eine sin(x)/x-Funktion, deren Betragsmaximum an der Stelle der Differenzfrequenz liegt.

Für die Signalauswertung können verschiedene statistische Methoden angewendet werden, die an sich bekannt und nicht Gegenstand der Erfindung sind.

Aus IEEE TRANSACTIONS ON INSTRUMENTATION AND MEASUREMENT, Bd. 42, 1. August 1993, Seiten 812-816: "A High Accuracy Microwave Ranging System for Industrial Applications" ist ein kombiniertes FMCW/CW-Abstandsmeßsystem bekannt, bei dem ein Wellenzug vorgegebener Trägerfrequenz alternativ mit einer Zeitfunktion moduliert oder unmoduliert als Sendesignal bereitgestellt und ein dazu in deterministischer Phasenbeziehung stehendes Referenzsignal für Auswertungszwecke abgezweigt wird. Das Sendesignal wird auf eine zu vermessende Übertragungsstrecke gegeben und das Referenzsignal gemeinsam mit dem reflektierten Signal einem Quadraturdemodulator (d.h. einer phasendifferenzbildenden Anordnung) zugeführt. Die Phasendifferenzfunktion wird sodann im Falle eines gesendeten CW-Signals bezüglich eines der Trägerfrequenz zugeordneten Gleichanteils und im Falle eines gesendeten FMCW-Signals bezüglich eines der Modulations-Zeitfunktion zugeordneten Wechselanteils ausgewertet und aus der Kombination beider Phasendifferenz-Informationen die Laufzeit der Übertragungsstrecke (und damit der Abstand) ermittelt.

Die Genauigkeit aller Abstandsmeßverfahren ist vom Signal- zu Rauschverhältnis im Empfangssignal, von der Meßzeit und der Bandbreite des Sendesignals abhängig. Ein weiterer Parameter ist die Eindeutigkeit der Messung. Die wesentliche Aufgabe besteht darin, eine möglichst geeignete Kombination der Modulation der Sendewelle und den zugehörigen Empfangs- und Auswerteverfahren zu finden. Dabei werden insbesondere eine hohe statistische Effektivität dieser Kombination sowie ein möglichst großer Eindeutigkeitsbereich der Messungen angestrebt. Dieses Problem ist auch mit den bekannten FMCW-Verfahren bislang technisch nicht befriedigend gelöst.

Der Erfindung liegt die Aufgabe zugrunde, die Genauigkeit der eindeutigen FMCW-Abstandsmessung bei kurzer Meßzeit soweit zu steigern, daß sie der mit dem Phasenvergleichsverfahren erreichbaren Genauigkeit entspricht. Außerdem sollte die Möglichkeit einer simultanen Vermessung mehrerer Meßpunkte geschaffen werden.

Diese Aufgabe wird bei einem FMCW-Abstandsmeßverfahren erfindungsgemäß durch die Merkmale des Anspruchs 1 gelöst. Vorteilhafte Ausgestaltungen des Verfahrens ergeben sich aus den Merkmalen der Unteransprüche.

Der Erfindung liegt die Erkenntnis zugrunde, daß die im Empfangssignal der FMCW-Systeme vorliegende Information in einen Informationsanteil, der in der Hüllkurve des Signals befindlich und auf die Frequenzmodulation des Signals zurückführbar ist und in einen Feinstrukturanteil aufteilbar ist, der bei Frequenzmodulation in der Phasendifferenz der mittleren Frequenz von Sende- und Empfangssignal und bei Intensitätsmodulation in der Phasendifferenz der mittleren Frequenz der Modulationsfunktion von Sende- und Empfangssignal liegt.

Die bekannten FMCW-Systeme nutzen lediglich die Hüllkurveninformation des empfangenen Signals und lassen damit einen entscheidenden Anteil der zusätzlich zur Verfügung stehenden Feinstrukturinformation außer acht. Die bislang erreichte Meßleistung ist daher bei gleichen Parametern des Systems wesentlich geringer als bei dem erfindungsgemäßen Verfahren, bei dem nunmehr sowohl die Hüllkurveninformation als auch die Feinstrukturinformation des empfangenen Signals in Kombination ausgenutzt werden. Bei gegebenen Systemparametern läßt sich dadurch eine um ein Vielfaches gesteigerte Meßauflösung oder aber eine um ein Vielfaches geringere Meßzeit als bei bisher üblichen Systemen erreichen.

Die Frequenzmodulation des Signals kann, wie bereits ausgeführt, sowohl durch Frequenzmodulation der Intensität der Trägerwelle als auch durch Modulation der Frequenz der Sendewelle erfolgen. In optischen Systemen spricht man in diesem Zusammenhang von inkohärenten und kohärenten Systemen.

Da die für die Genauigkeit entscheidende Hauptinformation des Signals in der Feinstrukturinformation des Trägers liegt, kann nunmehr die Hüllkurvenbandbreite so gering gewählt werden, daß sie noch eine Auswertung der Feinstrukturinformation unter gleichzeitiger Beibehaltung der Eindeutigkeit der Messung gewährleistet. Dies ist dann der Fall, wenn

$$\frac{E}{N_0} \gg \frac{(2\pi f_0)^2}{\beta_T^2}$$

gilt. Dabei sind $f_0$ die Trägerfrequenz, $\beta_T$ die sogenannte effektive Bandbreite der durch die Frequenzmodulation entstandenen Hüllkurve, E die Energie des Empfangssignals und $N_0$ die spektrale Rauschleistungsdichte im Empfangssignal. Daher ermöglicht das erfindungsgemäße Verfahren bei entsprechender Dimensionierung der Modulationsparameter eine Ausnutzung der elektrischen Bandbreite des Systems, die dem klassischen Phasenvergleichsverfahren entspricht, und gewährleistet gleichzeitig die Eindeutigkeit der Messungen.

Die Auswertung von Hüllkurven- und Feinstrukturinformation erfolgt im ersten Schritt durch Bestimmung der zeitlichen Phasendifferenz $\theta(t)$ zwischen einem Referenzsignal und dem Empfangssignal. Bei dem Referenzsignal handelt es sich um ein Signal, das eine deterministische Phasenbeziehung zum Sendesignal aufweist. Ein geeignetes Referenzsignal kann z. B. dadurch bereitgestellt werden, daß ein Anteil der modulierten Sendewelle ausgekoppelt wird. Zum anderen besteht die Möglichkeit, einen Anteil des die Intensität der Trägerwelle modulierenden Signals auszukoppeln. In beiden Fällen kann das Referenzsignal ebenso wie das Empfangssignal vor der Bildung der Phasendifferenz ein vorverarbeitendes Netzwerk elektrischer Natur oder aus wellenleitendem Medium durchlaufen. Ein solches Netzwerk kann beispielsweise dazu dienen, eine Frequenzumsetzung oder eine Laufzeitverzögerung durchzuführen, oder das Signal auf sonstige Weise zu konditionieren. Ebenfalls kann ein mit dem Sendesignal oder dem Modulationssignal synchronisierter Generator zur Erzeugung des Referenzsignals verwendet werden.

Zur Darlegung der bisher nicht erkannten und ausgewerteten Zusammenhänge zwischen der Hüllkurveninformation und der Feinstrukturinformation soll die Intensität oder Frequenz der Sendewelle gemäß

$$\cos\left(2\pi f_0 t + 2\pi \int_{-\infty}^{t} f(\eta)d\eta\right)$$

moduliert werden, wobei f(t) eine Zeitfunktion und $f_0$ eine Trägerfrequenz darstellt oder anders ausgedrückt, die Frequenz $f_0$ einer Trägerwelle wird mit einer Zeitfunktion f(t) moduliert. Ohne Beschränkung der Allgemeinheit kann der Einfluß eines vorverarbeitenden Netzwerks für Empfangs- oder Referenzsignal im weiteren unberücksichtigt bleiben. Dann lautet die zeitliche Differenzfunktion der Phasen zwischen Referenz- und Empfangssignal

$$\theta(t) = 2\pi f_0 \tau + 2\pi \int_{t-\tau}^{t} f(\eta)d\eta$$

mit der Laufzeit $\tau$ des Empfangssignals zwischen Sender, Meßpunkt oder Meßobjekt und Empfänger. Die Momentanfrequenz des modulierten Sendesignals

$$f_0 + f(t) = f_= + f_\sim(t)$$

läßt sich für beliebige Verläufe in einen Gleichanteil $f_=$ und einen Wechselanteil $f_\sim(t)$ aufspalten. Dabei sind in $f_=$ die zeitlich konstanten Frequenzen $f_0$ und evtl. konstante Anteile aus f(t) zusammengefaßt. Damit erhält man für die zeitliche Phasendifferenzfunktion $\theta(t)$ nach Integration über kleine Laufzeiten $\tau$

$$\theta(t) = 2\pi\tau \, (f_= + f_\sim(t)) = \theta_= + \theta_\sim(t)$$

mit

$$\theta_= = 2\pi\tau f_= \quad \text{und} \quad \theta_\sim(t) = 2\pi\tau f_\sim(t)$$

Wenn $f_=$ und $f_\sim(t)$ bekannt sind, dann kann bei gemessenen $\theta_=$ und $\theta_\sim(t)$ die Laufzeit $\tau$ somit über zwei voneinander unabhängige Funktionen bestimmt werden.

Dabei sind $\theta_=$ und $\theta_\sim(t)$ der Gleichanteil und der Wechselanteil der zeitlichen Phasendifferenzfunktion. Sowohl $\theta_=$ als auch $\theta_\sim(t)$ sind für kleine Laufzeiten $\tau$ linear abhängig von der Laufzeit, so daß durch Auswertung von $\theta_=$ und $\theta_\sim(t)$ zwei statistisch unabhängige Werte für die Signallaufzeit gewonnen werden können. Die Betrachtung kleiner Laufzeiten $\tau$ ist für industrielle Abstandsmessungen ohne Einschränkungen gültig.

Für große Laufzeiten $\tau$ läßt sich die Phasendifferenzfunktion entsprechend in einen Gleichanteil

$$\theta_= = g'(\tau, f_=)$$

und einen Wechselanteil

$$\theta_\sim(t) = g''(\tau, f_\sim(t))$$

zerlegen, aus denen bei Kenntnis der im allgemeinen nichtlinearen Funktionen g' und g" sowie des Frequenz-Gleich- und -Wechselanteils wiederum zwei unabhängige Werte für die Laufzeit gewonnen werden können.

Die Laufzeitinformation, die in $\theta_{\sim}(t)$ enthalten ist, korrespondiert mit der Hüllkurveninformation des Empfangssignals. Die in $\theta_=$ enthaltene Laufzeitinforrnation korrespondiert mit der Feinstrukturinformation. Die zu $\theta_{\sim}(t)$ gehörige Hüllkurveninformation ist eindeutig, nutzt allerdings nur einen geringen Teil der im Signal enthaltenen Information. Eine vollständige Auswertung aller im Signal enthaltenen Informationen wird durch zusätzliche Berücksichtigung der in $\theta_=$ enthaltenen Feinstrukturinformation erreicht, die für sich allein genommen mehrdeutig ist. Indem mit Hilfe der Hüllkurveninforrration eine eindeutige Grobschätzung gewonnen wird, läßt sich die Mehrdeutigkeit der Feinstrukturinformation eliminieren und dann durch Linearkombination beider Meßwerte eine eindeutige, genaue Bestimmung der Signallaufzeit gewinnen. Durch dieses Vorgehen wird im Gegensatz zu bekannten FMCW-Verfahren die gesamte im Empfangssignal vorhandene Information zur entscheidenden Verbesserung der Meßgenauigkeit bis an die signaltheoretische Grenze heran genutzt.

Im Falle eines beliebigen Modulationssignals läßt sich die Hüllkurveninformation durch Bestimmung eines Skalierungsfaktors zwischen dem Wechselanteil $\theta_{\sim}(t)$ der zeitlichen Phasendifferenzfunktion und dem Wechselanteil $f_{\sim}(t)$ der Modulationsfrequenzfunktion ermitteln und damit ein Grobmaß für die Laufzeit gewinnen. Die Feinstrukturinformation folgt aus dem Mittelwert der Phasendifferenzfunktion bezogen auf den Gleichanteil $f_=$ der Modulationsfrequenz.

Im Sonderfall einer linearen Modulation kann der Wechselanteil der Momentanfrequenz geschrieben werden als

$$f(t) = \frac{f_E - f_A}{T} \cdot t \; ; \frac{-T}{2} \leq t \leq \frac{T}{2}$$

mit der Modulationsanfangsfrequenz $f_A$ und der Modulationsendfrequenz $f_E$ sowie der Signaldauer T. Dann gilt

$$f_= = f_0 \text{ und } f_{\sim}(t) = f(t)$$

Die zeitliche Differenzfunktion der Phasen lautet dann nach Integration der Modulationsfrequenz über kleine Laufzeiten $\tau$

$$\theta(t) = 2\pi\tau\left( f_0 + \frac{f_E - f_A}{T} \cdot t \right) = \theta_= + \theta_{\sim}(t) \, ,$$

wobei

$$\frac{-T}{2} \leq t \leq \frac{T}{2}$$

mit

$$\theta_= = 2\pi\tau f_0 \text{ und } \theta_{\sim}(t) = 2\pi\tau \cdot \frac{f_E - f_A}{T} \cdot t$$

Die Bestimmung der beiden Laufzeitinformationen aus der Hüllkurveninforrration $\theta_{\sim}(t)$ und der Feinstrukturinformation $\theta_=$ kann in diesem Fall im Zeitbereich beispielsweise durch lineare Regression der Momentanphasenwerte erfolgen. Die während der Signaldauer T aufgenommenen Differenzphasenwerte $\theta(t)$ werden durch eine Ausgleichsgerade linearisiert, so daß die weiter oben erläuterte Steigung der Phasengerade der Laufzeit $\tau$ der Hüllkurve proportional ist. Der Mittelwert der Phasenmeßwerte dividiert durch die Trägerfrequenz ist der aus der Feinstrukturinformation zu entnehmenden Laufzeit $\tau$ proportional.

Aus der Steigung der Ausgleichsgeraden läßt sich ein erster, eindeutiger Distanzwert berechnen, der allerdings mit einer vergleichsweise hohen statistischen Unsicherheit behaftet ist. Dieser erste Meßwert wird nachfolgend in eine eindeutige Phaseninformation umgerechnet. Auf den Mittelwert der Phasenmeßwerte, der zwischen 0 und $2\pi$ liegt, wird nun solange $2\pi$ aufaddiert, bis der resultierende Wert dem aus der Steigung der Ausgleichsgeraden ermittelten Wert möglichst nahe kommt. Aus dem auf diese Weise gewonnenen Phasenwert läßt sich unmittelbar ein zweiter, eindeutiger Distanzwert mit erheblich geringerer Varianz gewinnen. Beide Distanzwerte können linear miteinander zum endgültigen Meßwert kombiniert werden, um eine optimale statistische Effizienz zu erhalten.

Für eine Auswertung im Frequenzbereich sind besondere Algorithmen, wie beispielsweise die Fast-Fourier-Transformation bekannt.

Bei geringfügig nichtlinearer Modulation des Sendesignals kann die Bestimmung der beiden Laufzeitinformationen analog erfolgen.

Das erfindungsgemäße Verfahren wird nachfolgend anhand von in der Zeichnung schematisch dargestellten Ausführungsbeispielen erläutert. Im einzelnen zeigen:

Fig. 1: die Prinzipskizze eines lasergestützten Distanzmessers, und

Fig. 2: die Prinzipskizze eines faseroptischen Distanzmessers zur Simultanvermessung mehrerer Meßstellen.

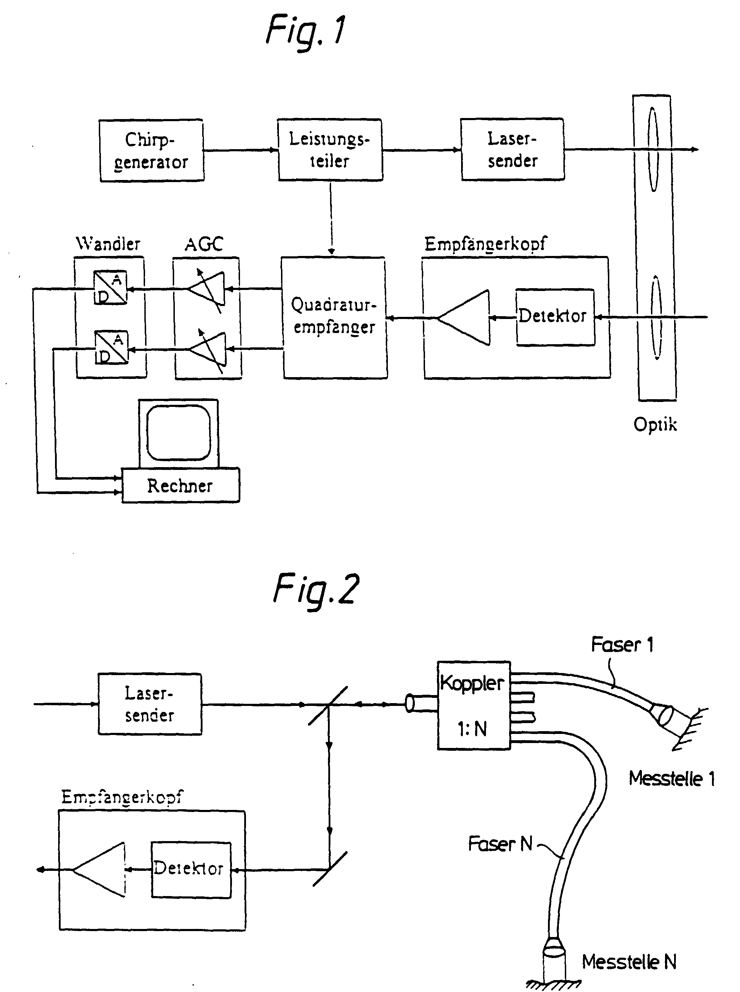

In Fig. 1 erzeugt ein Chirpgenerator ein linear frequenzmoduliertes Signal, das an einem Leistungsteiler in ein Sende- und ein Referenzsignal aufgeteilt wird. Das Sendesignal moduliert die Intensität eines Laserstrahls, der als Trägerwelle dient. Als Referenzsignal kann auch ein Teil des intensitätsmodulierten Laserstrahls genommen werden. Der Laserstrahl wird über eine Sendeoptik auf einen nicht dargestellten Objektpunkt gerichtet. Ein Teil des Lichts wird an dem Objekt reflektiert bzw. gestreut und durch die Empfangsoptik auf einen Detektor fokussiert, der die optische Empfangsleistung in ein elektrisches Signal konvertiert.

Nach Verstärkung gelangt das Signal zusammen mit dem Referenzsignal in einen Quadraturempfänger, in dem das Sende- und das Empfangssignal komplex miteinander multipliziert werden. Das Ergebnis ist ein komplexer Zeiger, dessen zeitliche Phasenfunktion der Differenzphase θ(t) zwischen Sende- und Empfangssignal entspricht. Real- und Imaginärteil des komplexen Zeigers werden in diesem Ausführungsbeispiel nach Durchgang durch einen AGC-(Automatic Gain Control)-Verstärker über A/D-Wandler digitalisiert und zur Bestimmung der Momentanphasenfunktion und anschließender Ermittlung der Signallaufzeit nach dem erfindungsgemäßen Verfahren in einem Rechner verarbeitet. Die insoweit beschriebene Schaltungsanordnung ist an sich bekannt.

Ein Abstandssensor mit diesem Aufbau eignet sich damit sowohl für die hochauflösende Distanzvermessung als auch in Verbindung mit einer Scaneinheit für die dreidimensionale Vermessung von Objekten oder für verschiedene Aufgaben bei der Kontrolle von Maßtoleranzen in der Qualitätssicherung oder bei der Gebäudevermessung oder als Visualisierungssystem in der Robotik.

Neben der dargestellten Freiraumausbreitung des Sende- und Empfangsstrahles ist auch eine Zwischenschaltung von beliebigen optischen Komponenten zur Lichtlenkung, wie z. B. faseroptischer Elemente, möglich. Dasselbe Meßprinzip läßt sich auch unter Verwendung einer Trägerwelle im RADAR-Frequenzbereich realisieren. Dazu sind der Lasersender in Fig. 1 durch eine Sendeantenne und der Detektor durch eine Empfangsantenne zu ersetzen. Der so aufgebaute Distanzmesser kann mit Hilfe der Hüllkurvenund Feinstrukturinformation ähnlich wie der lasergestützte Distanzmesser in Radialrichtung den Abstand zu einem Objekt, das Radarwellen reflektiert, hochauflösend messen.

Das Meßverfahren läßt sich darüber hinaus auch unter Verwendung einer Schall-Trägerwelle realisieren. Dazu sind der Lasersender durch einen Sendeschallwandler und der Detektor durch einen Empfangsschallwandler zu ersetzen.

Fig. 2 zeigt eine vorteilhafte Ausgestaltung einer Meßanordnung, bei der das erfindungsgemäße Verfahren angewendet werden kann und die eine simultane Vermessung mehrerer Meßstellen ermöglicht. Es wird von der bereits erwähnten Möglichkeit der Zwischenschaltung faseroptischer Lichtleiter Gebrauch gemacht. Einer gemeinsamen Sende-Empfangsoptik ist ein Koppler zugeordnet, der den Sendestrahl auf mehrere Lichtleiter verteilt und die an den Meßstellen reflektierten Strahlen wieder zusammenführt. Zwischen Lasersender und Koppler ist ein Strahlteiler angeordnet, der das Empfangssignal dem Detektor zuführt. Die nicht dargestellten Signalerzeugungs- und Signalverarbeitungselemente entsprechen denen in Fig. 1.

Die Auswertung des Signals geschieht vorteilhafterweise wiederum mit Hilfe eines Quadraturdemodulators, AGC-Verstärkers und digitaler Signalverarbeitung. Falls die Summen aus Glasfaserlänge und Meßstrecke für die einzelnen Fasern hinreichend verschieden sind, läßt sich der zu jeder Meßstelle gehörige Anteil des Empfangssignals z. B. im Frequenzbereich separieren und jeweils getrennt unter Nutzung der Hüllkurven- und Feinstrukturinformation auswerten. Unter gleichen Voraussetzungen gilt das natürlich auch bei einer Freiraumübertragung, so daß unterschiedlich entfernt liegende Objekte simultan in einem einzigen Meßvorgang vermessen werden können.

Anstelle des Kopplers in Fig. 2 kann die in Fig. 1 dargestellte Sendeoptik gleichzeitig als Empfangsoptik verwendet werden. Dabei kann die Optik mit einer Beschichtung versehen sein, die einen Teil der Sendewelle direkt in den Empfängerkopf zurückreflektiert. Auf diese Weise entsteht ein interner Vergleichsweg bekannter Länge. Die Vergleichsmessung erfolgt simultan zur Objektvermessung, so daß identische apparative Bedingungen vorliegen und z.B. Driften der elektronischen Bauelemente oder in der Sendeleistung keine Rolle spielen. Der Vorteil einer gemeinsamen Sende-/Empfangsoptik liegt darin, daß auch bei kurzen Objektdistanzen die maximal mögliche Empfangsleistung vorliegt.

**Patentansprüche**

1. FMCW-Abstandsmeßverfahren, bei dem

   - ein Wellenzug der Trägerfrequenz $f_0$ mit einer Zeitfunktion f(t) moduliert und in ein Sendesignal und ein dazu in deterministischer Phasenbeziehung stehendes Referenzsignal aufgeteilt wird,

   - das Sendesignal auf eine zu vermessende Übertragungsstrecke gegeben und das Referenzsignal einer phasendifferenz-bildenden Anordnung zugeführt wird,

   - das in der Übertragungsstrecke reflektierte Signal mit der Laufzeit $\tau$ verzögert als Empfangssignal ebenfalls der phasendifferenz-bildenden Anordnung zugeführt wird,

   - die phasendifferenz-bildende Anordnung die zeitliche Differenzfunktion $\theta(t)$ der Phasen zwischen Referenz- und Empfangssignal bildet,

   - die Phasen-Differenzfunktion $\theta(t)$ bezüglich eines der Trägerfrequenz $f_0$ zugeordneten Gleichanteils $\theta_= = g'(\tau, f_0)$ und eines der Modulations-Zeitfunktion f(t) zugeordneten Wechselanteils $\theta_\sim(t) = g''(\tau, f_\sim(t))$ getrennt ausgewertet wird

   und
   die dem Abstand proportionale Laufzeit $\tau$ durch kombinierte Auswertung beider Phasendifferenz-Informationen ermittelt wird.

2. Abstandsmeßverfahren nach Anspruch 1, **dadurch gekennzeichnet, daß** bei kleinen Laufzeiten $\tau$ die Auswertung der Phasen-Differenzfunktion $\theta(t)$ bezüglich des Gleichanteils gemäß $\theta_= = 2\pi\tau f_=$ und bezüglich des Wechselanteils gemäß $\theta_\sim(t) = 2\pi\tau f_\sim(t)$ erfolgt.

3. Abstandsmeßverfahren nach Anspruch 1 oder 2, **dadurch gekennzeichnet, daß** als phasendifferenz-bildende Anordnung ein Quadraturempfänger verwendet wird, in dem das Referenz- und Empfangssignal komplex miteinander multipliziert werden, so daß sich ein komplexer Zeiger ergibt, dessen zeitliche Phasenfunktion $\theta(t)$ entspricht.

4. Abstandsmeßverfahren nach Anspruch 1 oder 2, **dadurch gekennzeichnet, daß** aus $\theta_\sim(t)$ ein eindeutiger Grobwert für den Abstand und aus $\theta_=$ eine Feinkorrektur bestimmt wird.

5. Abstandsmeßverfahren nach einem der vorhergehenden Ansprüche, **dadurch gekennzeichnet, daß** die Phasen-Differenzfunktion $\theta(t)$ für unterschiedliche Übertragungsstrecken simultan ermittelt und hinsichtlich Gleich- und Wechselanteil ausgewertet wird.

6. Abstandsmeßverfahren nach Anspruch 5, **dadurch gekennzeichnet, daß** die Phasen-Differenzfunktion $\theta(t)$ einer internen Übertragungsstrecke bekannter Länge gebildet und ausgewertet wird.

**Claims**

1. Frequency-modulated carrier wave distance measurement method, in which

   - a wave train of the carrier frequency $f_0$ is modulated by a time function f(t) and divided up into a transmitted signal and a reference signal standing in deterministic phase relationship thereto,
   - the transmitted signal is passed to a transmission path to be measured and the reference signal is fed to an arrangement forming a phase difference,
   - the signal reflected in the transmission path and delayed by the transit time $\tau$ is likewise fed to the arrangement, which forms the phase difference, as received signals,
   - the arrangement, which forms the phase difference, forms the time difference function $\theta(t)$ of the phases between the reference signal and the received signal,

- the phase difference function θ(t) is evaluated separately with respect to a constant component $\theta_= = g'(\tau, f_0)$ associated with the carrier frequency $f_0$ and an alternating component $\theta_{\sim}(t) = g''(\tau, f_{\sim}(t))$ associated with the modulation time function f(t) and the transit time τ proportional to the distance is ascertained by combined evaluation of both phase difference information items.

2. Distance measurement method according to claim 1, characterised thereby, that for short transit times τ, the evaluation of the phase difference function θ(t) takes place according to $\theta_= = 2\pi\tau\,f_=$ with respect to the constant component and according to $\theta_{\sim}(t) = 2\pi\tau\,f_{\sim}(t)$ with respect to the alternating component.

3. Distance measurement method according to claim 1 or 2, characterised thereby, that a quadrature receiver, in which the reference signal and the received signal are multiplied one by the other in complex manner, is used as the arrangement, which forms the phase difference, so that a complex vector results, the time phase function θ(t) of which corresponds.

4. Distance measurement method according to claim 1 or 2, characterised thereby, that an unambiguous coarse value for the distance is ascertained from $\theta_{\sim}(t)$ and a fine correction is ascertained from $\theta_=$.

5. Distance measurement method according to one of the preceding claims, characterised thereby, that the phase difference function θ(t) is ascertained simultaneously for different transmission paths and evaluated in respect of the constant component and the alternating component.

6. Distance measurement method according to claim 5, characterised thereby, that the phase difference function θ(t) of an internal transmission path of known length is formed and evaluated.


**Revendications**

1. Procédé de mesure de distances en ondes entretenues de fréquence modulée dans lequel

- un train d'ondes de la fréquence porteuse $f_o$ est modulé avec une fonction dans le temps f(t) et est réparti en un signal d'émission et un signal de référence en relation de phases déterminées avec celui-ci,
- le signal d'émission est donné à un tronçon de transmission à mesurer et le signal de référence est conduit à un agencement formant une différence de phase,
- le signal réfléchi dans le tronçon de transmission est conduit en étant retardé du temps de parcours τ, en tant que signal de réception également dans l'agencement formant une différence de phase,
- l'agencement formant une différence de phase forme la fonction de différence dans le temps θ(t) des phases entre le signal de référence et de réception,
- la fonction de différence de phase θ(t) est évaluée par rapport à une part constante $\theta_= = g'(\tau_1 f_o)$ affectée à une fréquence porteuse $f_o$ et une part variable affectée à la fonction f(t) du temps de modulation $\theta_{\sim}(t) = g''(\tau, f_{\sim}(t))$ et
- le temps de parcours τ proportionnel à la distance est obtenu par évaluation combinée des deux informations de différence de phase .

2. Procédé de mesure de la distance selon la revendication 1, caractérisé en ce que, pour de petits temps de parcours τ , l'évaluation de la fonction de différence de phase θ(t) par rapport à la part constante se produit selon $\theta_= = 2\pi\tau f=$ et par rapport à la part variable selon $\theta_{\sim}(t) = 2\pi\tau f_{\sim}(t)$.

3. Procédé de mesure de la distance selon la revendication 1 ou 2, caractérisé en ce qu'en tant qu'agencement formant la différence de phase on utilise un récepteur en quadrature, dans lequel le signal de référence et le signal de réception sont multipliés l'un par l'autre de façon complexe, de manière à obtenir un nombre complexe dans la fonction de phase dans le temps θ(t) correspond .

4. Procédé de mesure de la distance selon la revendication 1 ou 2, caractérisé en ce que l'on détermine, à partir de $\theta_{\sim}(t)$, une valeur approximative univoque pour la distance et à partir de $\theta_=$, une correction précise .

5. Procédé de mesure de la distance selon l'une quelconque des revendications précédentes, caractérisé en ce que la fonction de différence de phase θ (t) est obtenue simultanément pour différents tronçons de transmission et est évaluée en ce qui concerne la part constante et la part variable .

**6.** Procédé de mesure de la distance selon la revendication 5, caractérisé en ce que la fonction de différence de phase θ(t) est formée d'un tronçon de transmission interne d'une longueur connue et est évaluée .

## Fig. 1

## Fig. 2